(19) Europäisches Patentamt
European Patent Office
Office européen des brevets

(11) **EP 1 895 693 B1**

(12) **EUROPEAN PATENT SPECIFICATION**

(45) Date of publication and mention
of the grant of the patent:
**30.05.2012 Bulletin 2012/22**

(51) Int Cl.:
*H04B 15/00* (2006.01)     *H04B 7/005* (2006.01)
*H04B 1/707* (2011.01)

(21) Application number: **07116737.3**

(22) Date of filing: **02.09.2004**

(54) **Efficient frame tracking in mobile receivers**

Effiziente Rahmenverfolgung in mobilen Empfängern

Poursuite de trame efficace dans des récepteurs mobiles

(84) Designated Contracting States:
**AT BE BG CH CY CZ DE DK EE ES FI FR GB GR
HU IE IT LI LU MC NL PL PT RO SE SI SK TR**

(30) Priority: **30.09.2003 US 507848 P
10.12.2003 US 733952**

(43) Date of publication of application:
**05.03.2008 Bulletin 2008/10**

(62) Document number(s) of the earlier application(s) in
accordance with Art. 76 EPC:
**04782998.1 / 1 668 805**

(73) Proprietor: **INTERDIGITAL TECHNOLOGY
CORPORATION
Wilmington, DE 19801 (US)**

(72) Inventors:
• **Bultan, Aykut
Bayside, NY 11360 (US)**
• **Haim, John W.
Baldwin, NY 11510 (US)**
• **Grieco, Donald M.
Manhassett, NY 11030 (US)**

(74) Representative: **Engdahl, Stefan
AWAPATENT AB
P.O. Box 45086
104 30 Stockholm (SE)**

(56) References cited:
**US-A1- 2004 264 415**

**Description**

FIELD OF THE INVENTION

The present invention relates generally to channel estimation in wireless communications; in particular to tracking channel impulse response drifts in time for controlling frame synchronization of received significant paths in a multipath environment by mobile receivers. More particularly, the invention relates to determining the validity of a most significant path tracked in the wireless signal received by a wireless transmit/receive unit.

BACKGROUND OF THE INVENTION

Hereafter, a wireless transmit/receive unit (WTRU) includes, but is not limited to, a user equipment, a mobile station, a fixed or mobile subscriber unit, a pager, or any other type of device capable of operating in a wireless environment. When referred to hereafter, a base station includes, but is not limited to, a Node B, a site controller, an access point, or other interfacing device in a wireless environment.

Full downlink (DL) synchronization between a base station and a WTRU is obtained when the frame synchronization, code timing, and code locations are synchronized. Frame synchronization defines the beginning of a frame as seen by the WTRU receiver. Code timing is an integer multiple of the sampling period of the received signal in the WTRU receiver front end. Code location is the position of a path or multipath in time as observed by the WTRU receiver. Full synchronization is completed in three stages with three different algorithms: cell search (CS), automatic frequency control (AFC), and frame tracking (FT).

In the first stage, the CS algorithm finds the cell on which the WTRU is camped and performs frame synchronization based on the location of the first significant path (FSP) in the delay spread of a multipath channel. After the CS is completed, AFC commences. The AFC algorithm adjusts the code timing by adjusting the control voltage of the voltage controlled oscillator (VCO). Code timing is initially adjusted and also maintained by the AFC. When AFC is in its converged state (when the VCO operating frequency is adjusted), code locations are found by channel estimation. The output of channel estimation is code locations for every DL slot for the WTRU receiver.

Although CS performs the initial frame synchronization, there is still a need for maintenance of frame synchronization. Frame tracking is one way to maintain the DL frame synchronization of the WTRU. Since the frame synchronization is based on the location of the FSP, the frame tracking procedure is responsible for updating the FSP. The frame tracking procedure will run periodically after the initial frame synchronization.

If the frame tracking procedure does not run periodically, some paths at either end of the channel estimation vector of the WTRU may disappear, resulting in degraded performance due to loss of these paths. There are three main cases that may cause this to happen: WTRU motion, shadowing, and a fading multipath channel.

WTRU motion will result in a time shift of the channel estimation vector to either side depending on the initial and current positions of the WTRU. When the WTRU moves closer to the base station after being initially synchronized to it based on a particular distance, the propagation delay decreases. The FSP then appears earlier in time compared to the initial position. The paths will drift to the left of the channel estimation vector and will eventually disappear. The paths will drift in the opposite direction (i.e., towards the right edge of the channel estimation sequence vector), if the WTRU moves away from the base station. As long as frame synchronization with respect to the FSP position is updated, the channel estimation vector will show the FSP at or near the beginning of the channel estimation vector and all the paths in the delay spread will appear throughout the vector. As an example, for a WTRU radial velocity of 120 km/h, the drift of the FSP will happen very slowly, approximately a one-chip drift in 260 frames at 3.84 Mcps as used for 3GPP W-CDMA.

Multipath channel shadowing is another case where a frame synchronization update is required. During the initial synchronization of the WTRU, an object may block the direct path from the base station to the WTRU. When the blocking object or the WTRU changes position, the direct path may appear earlier than the currently known FSP and even earlier than the channel estimation window. To use this path, an FSP location update is required to provide frame synchronization.

Fading multipath channels are yet another challenge for frame synchronization. CS may not be able to detect the FSP successfully under multipath fading channel conditions. This situation may be avoided by using a longer accumulation period during the initial CS. However, due to a non-synchronized VCO and a limited time budget for initial frame synchronization, a number of frames of accumulations are performed that are insufficient in all cases to successfully find the position of the FSP.

For a multipath fading channel, the channel estimation must find the time locations and complex magnitudes of each path. A channel estimation algorithm should be able to follow the relatively slow and fast varying characteristics of the channel. One example of slowly varying channel characteristics is motion of a WTRU. Also, the difference of the frequencies of the WTRU and the base station local oscillators may result in a drift in the channel impulse response. When these effects are combined, they result in a drift in time in the channel impulse response.

Faster channel characteristic changes are due to the well-known multipath fading phenomena, which quickly makes dramatic changes in the magnitudes of the paths. The motion of the WTRU receiver affects all the paths in a similar manner. However, the multipath fading affects the paths in a unique manner by changing their power levels independently. Conventional channel estimation algorithms do not make use of these differences efficiently. This may result in excessive computations or lack of accuracy.

Multipath fading requires more frequent updates with higher resolution, where the frame of the data is fixed. For example, the commonly used RAKE receiver locates the position of the paths and tracks them individually by assigning a code tracker for each path. Meanwhile, coping with WTRU motion requires signal processing with less frequent updates and with lesser time resolution. These differences in update frequencies and resolutions are a challenge for channel estimation.

Frame tracking of a wireless communication channel is performed with signal processing at over-sampled transmission rates in a multipath environment. The frame tracking method operates in conjunction with another algorithm to provide the final channel estimates. These channel estimates are useful for a RAKE, an equalizer, or a multi-user detection (MUD) receiver for channel equalization. Frame tracking of a mobile receiver is maintained to counteract motion of the receiver and local oscillator drift. The frame tracking operates on the first significant signal path and updates its position at a relatively slow speed. In response to this, channel estimation of the received multipath signal is enhanced by operating with a fixed short window size, which in turn allows frequent updates of channel estimates. The frame tracking allows all moving paths to remain inside the channel estimation window. As a result, fast changing profiles of the multipath propagation channel are estimated with improved accuracy. Tracking each path is avoided by separating the frame tracking and channel estimation algorithms.

A method for frame synchronization of a receiver in a wireless communication system wherein data is transmitted in frame units in a multipath environment begins by extracting data samples for a predetermined window size. A training sequence corresponding to a given cell parameter is generated. The training sequence may be a pilot, as in FDD CDMA, or a midamble, as in TDD W-CDMA. The data is correlated with the training sequence over different lags to locate the position of the first significant path, which defines the beginning of the frame. The correlated data is accumulated N times for each lag position to produce at least one accumulation vector. A most significant path value and position is determined that is the largest value among the accumulation vectors. A frame synchronization correction value is calculated based on the difference between the first significant path position and a constant called frame offset. The frame synchronization is adjusted based upon the frame synchronization correction value.

SUMMARY OF THE INVENTION

The invention relates to a part of the frame tracking procedure and is defined in the independent claims.

BRIEF DESCRIPTION OF THE DRAWINGS

A more detailed understanding of the invention may be had from the following description of preferred embodiments, given by way of example, and to be understood in conjunction with the accompanying drawings, wherein:

Figure 1 shows a block diagram of inputs and outputs for a frame tracking (FT) procedure;

Figure 2 shows a block diagram of the FT procedure of FIG. 1 in greater detail;

Figure 3 shows a block diagram of FT procedure elements;

Figure 4 shows a block diagram of a midamble generator and correlator;

Figure 5 shows generation of shifted midamble training sequences;

Figure 6 shows a processing timeline of the FT procedure; and

Figures 7A-7C are flowcharts showing operation of the FT procedure.

DETAILED DESCRIPTION OF PREFERRED EMBODIMENTS

Although the embodiments are described hereinafter in conjunction with a third generation partnership program (3GPP) wideband code division multiple access (W-CDMA) system utilizing the 3.84 Mcps time division duplex mode (TDD), the embodiments are applicable to any hybrid code division multiple access (CDMA)/time division multiple access (TDMA) communication system, such as TD-SCDMA. Additionally, the embodiments are applicable to CDMA systems, in general, such as the proposed frequency division duplex (FDD) mode of 3GPP W-CDMA or 3GPP2 CDMA 2000.

Frame tracking (FT) is a process to maintain the downlink (DL) frame synchronization of the wireless transmit/receive unit (WTRU). Since frame synchronization is based on the location of the first significant path (FSP), the FT process is responsible for updating the FSP. The FT process will commence after initial cell search (CS) is completed and automatic frequency control (AFC) has converged. Afterwards, it runs periodically.

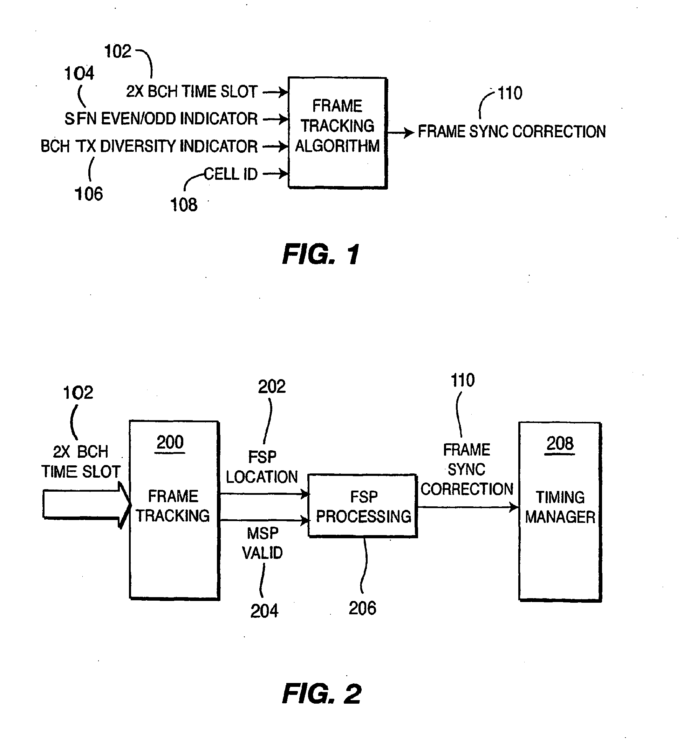

Figure 1 shows a block diagram of input and output signals of a FT process. The data input includes a twice over-sampled broadcast channel (BCH) in time slot intervals 102. Three control signals are also provided as inputs: the system frame number (SFN) even/odd indicator 104, the BCH transmitter time diversity indicator 106, and the identification of the resident base station cell 108 (step 702). A frame synchronization correction signal 110 is the output of the FT process.

Figure 2 shows a block diagram of elements used to implement the FT process. A FT processor 200 outputs a location for the FSP 202 and an indicator 204 whether the most significant path (MSP) is valid. An FSP processing portion 206 analyzes the FSP location 202 and the MSP valid indicator 204 to produce the frame synchronization correct signal 110. A timing manager 208 uses the frame synchronization correct signal 110 to adjust the timing of the system.

For example, in a 3GPP TDD system, data extraction from the input data is preferably taken from the midamble position in the BCH timeslot, which is 976 chips or 1952 half-chip complex samples from the beginning of the slot. This midamble section contains the training sequence encoded onto the data, which is useful for channel estimation. Preferably, FT is performed using a window sampling technique. Accordingly, the BCH data input further comprises $2 \times$ MWS complex half-chip samples before and after the nominal midamble location, where MWS is the multipath window size. For convenience, these samples may be split into separate even and odd sequences.

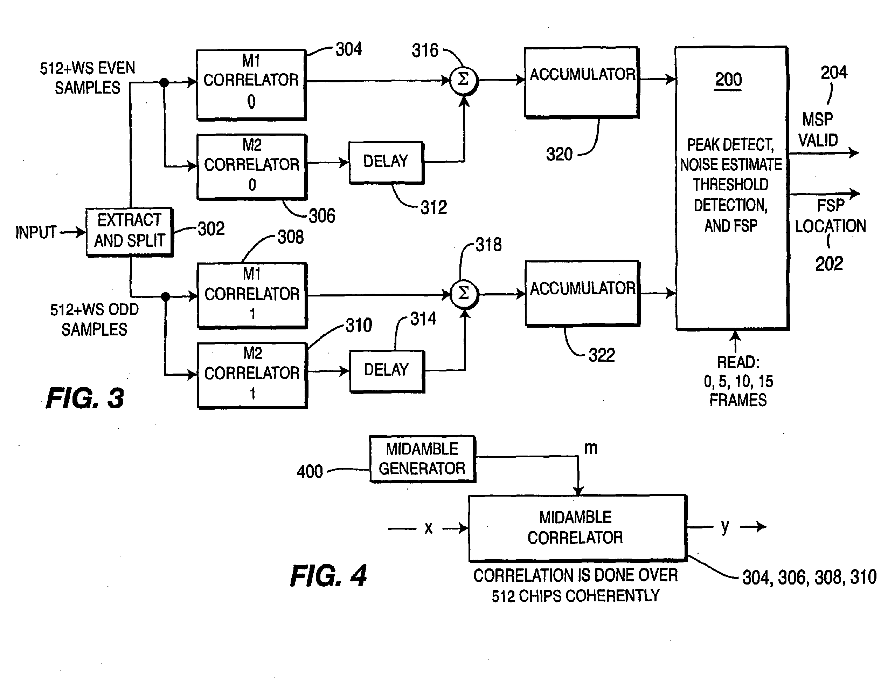

Figure 3 shows a block diagram of the FT process elements, including an extract and split unit 302; two midamble correlators 304, 306 for even sample processing; two midamble correlators 308, 310 for odd sample processing; an even sample delay unit 312; an odd sample delay unit 314; correlator adders 316, 318; an even sample accumulator 320; an odd sample accumulator 322; and the frame tracker processor 200. Each midamble correlator 304, 306, 308, 310 is fed by a midamble generator 400 as shown in Figure 4. It is noted that one midamble generator 400 could be used, provided that it is time shared among the correlators 304, 306, 308, 310. The midamble generator 400 produces a 512 chip long midamble $m^{(1)}$, and if BCH_tx_diversity is ON, a midamble $m^{(2)}$, based on the basic midamble sequence corresponding to Cell ID, where $m^{(k)}$ represents a basic midamble sequence shifted by k chips.

The position of the FSP is found by performing correlations of the received BCH midamble(s) over different lags. If control signal BCH_tx_diversity is OFF, only midamble $m^{(1)}$ is used; otherwise, both midambles $m^{(1)}$ and $m^{(2)}$ are used. The part of the BCH timeslot from $2 \times (976 - MWS)$ to $2 \times (976 + MWS)$ half-chip complex samples is extracted, i.e., the midamble plus 50 earlier and 50 later chips. These samples are split into even and odd sequences for separate processing.

For midamble $m^{(1)}$, there are two correlators 304, 308, one for the even sequence 304, and the other for the odd sequence 308. If midamble $m^{(2)}$ is processed (BCH_tx_diversity is ON), there is an additional pair of correlators 306, 310, as shown in Figure 3. In each of the two or four correlators, for each of 101 lag positions n, where n varies as -50, -49, ... +49, +50 chip positions, the correlation is computed as:

$$p_c(n) = \Big| \sum_{i=0}^{511} r(i + n + 50) m^*(i) \Big|, \qquad \text{Equation 1}$$

where $p_c(n)$ is the output of correlator $c$, $r(i)$ is the extracted data of length 612, where $0 \le i \le 611$, and $m(i)$ is the midamble. Note that the output of the correlator is a magnitude, so that further processing of correlator outputs is non-coherent.

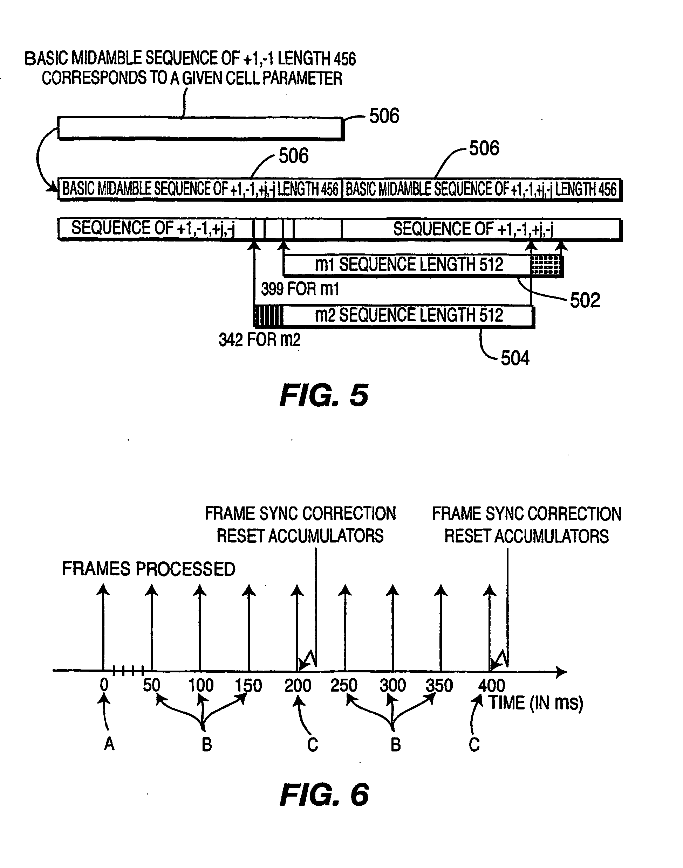

The delay units 312, 314 provide a preferable 57 chip delay between midamble $m^{(1)}$ and midamble $m^{(2)}$. The delay corresponds to the sequence shift between the two midambles. Figure 5 shows midamble sequences $m^{(1)}$ 502 and $m^{(2)}$ 504 in relation to the basic midamble sequence 506 of length 456. Using a 57 chip delay as an example, with BCH_tx_diversity ON, elements -50 thru -7 of the output vectors of the even and odd $m^{(2)}$ correlators 306, 310 are added to elements 7 thru 50 of the output vectors of the even and odd $m^{(1)}$ correlators 304, 308, respectively. This is equivalent to adding a 57-element delayed version of $m^{(2)}$ correlator output vector to an $m^{(1)}$ correlator output vector.

The two correlator outputs, or summed output vectors for the case of BCH_tx_diversity ON, are computed four times, each time five frames apart. These outputs are accumulated over this period by accumulators 320, 322 as follows:

$$A_c(n) = \sum_{i=1}^{4} p_c^{(i)}(n), \qquad \text{Equation 2}$$

where $p^{(i)}c(n)$ is the output vector of correlator c for the $i^{th}$ computation, for the $n$ range $-50 \le n \le +50$. The accumulators 320, 322 are reset after frame tracking value Frame_Sync_Correction 110 is computed. The elements of Figures 1-4 can be implemented on a single integrated circuit (IC), multiple ICs, as discrete components, or as a combination of these.

Figure 6 shows a timing diagram for the FT processing. The FT process begins working after initial cell search is completed and AFC comes to steady state (point A). Afterwards, FT reads and performs correlations of the BCH timeslot every five frames (point B), which equals every 50ms for preferable frame size of 10ms. After the fourth BCH is processed (point C), the frame tracking correction value 110 is computed and applied for the frame of the next read BCH timeslot.

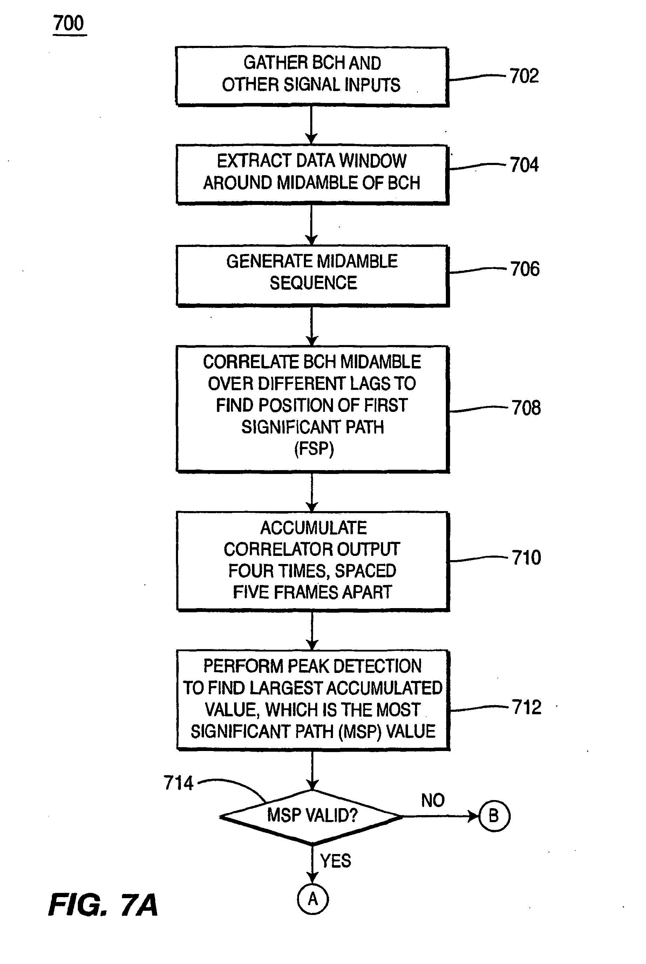

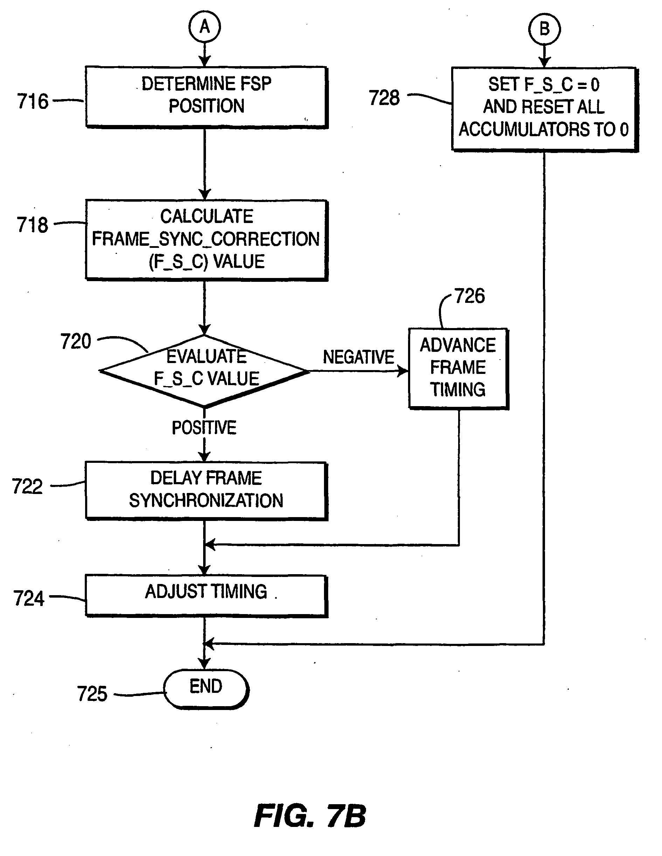

Figures 7A and 7B show a flowchart of a frame tracking procedure 700. The procedure 700 begins by gathering the BCH and the other signal inputs (step 702). A data window is extracted around the midamble of the BCH (step 704) and a midamble sequence is generated (step 706). The BCH midamble is correlated over different lags to find the position of the FSP (step 708). The correlator output is accumulated four times, spaced five frames apart (step 710).

Steps 702-710 have been described in greater detail above in connection with Figures 1-6.

After accumulating four times, the FT processor performs peak detection, in which the process finds the element containing the largest value among the two accumulator vectors. The identified largest value is the most significant path (MSP) value (step 712). The position of the MSP value is the MSP position and the accumulator that contains the MSP is the MSP accumulator.

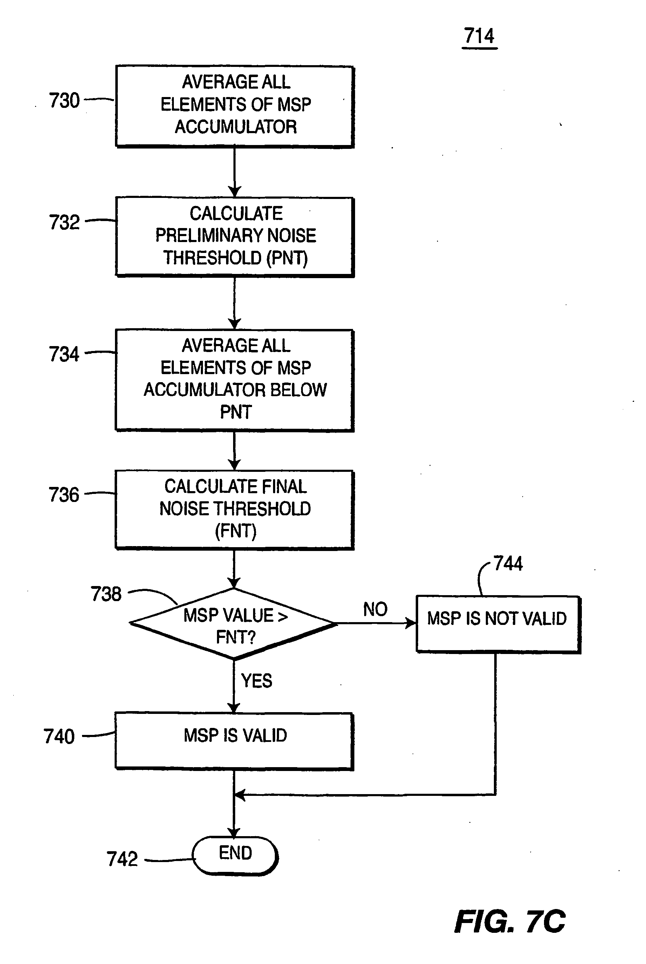

The validity of the MSP, i.e., when the SNR of the accumulator output is strong enough to assume that a valid path has been identified, (step 714) is determined in accordance with the present invention as follows and as shown in Figure 7C. An estimate of the noise power is obtained, for example, using the following two step procedure. First, the preliminary noise estimate (PNE) is the average of all elements of the MSP accumulator (step 730). The preliminary noise threshold is $C_1 \times$ PNE (step 732); a preferred value for $C_1$ is 1.5. Second, the final noise estimate (FNE) is the average of all elements in the MSP accumulator below the preliminary threshold (step 734).

The final noise threshold is determined by $C_2 \times$ FNE if control signal BCH_tx_diversity is OFF or $C_3 \times$ FNE if it is ON (step 736); a preferred value for $C_2$ is 1.83 and a preferred value for $C_3$ is 2.2. If the MSP value is above the final noise threshold (step 738), then control signal MSP_valid is ON (step 740) and the method terminates (step 742). If the MSP value is below the final noise threshold (step 738), then the MSP_valid control signal is OFF (step 744) and the method terminates (step 742).

Referring back to Figures 7A and 7B, detection of the FSP involves examining the status of control signal MSP_valid (step 714). If control signal MSP_valid is ON, starting from the earliest (-50) position, elements of both even and odd accumulators 320, 322 are checked against the final noise threshold. The first position that has a value above the final noise threshold is selected as the FSP position (step 716). If control signal MSP_valid is OFF, then this step is skipped.

Next, FSP processing is performed as follows. If control signal MSP_valid is ON, frame tracking value Frame_Sync_Correction 110 is computed (step 718) as:

$$\text{Frame\_Sync\_Correction} = \text{FSP position} - \text{Frame Offset} \qquad \text{Equation 3}$$

If the magnitude of Frame_Sync_Correction is greater than a predetermined maximum frame sync correction value, Smax, it is limited to $\pm$Smax, which is preferably in a range from six to ten chips (step 720). A positive value of Frame_Sync_Correction indicates that frame synchronization should be delayed, i.e., the FSP was detected later than expected (step 722). The timing is adjusted (step 724) and the method terminates (step 725). A negative value of Frame_Sync_Correction indicates that frame timing should be advanced, i.e., the FSP was detected earlier than expected (step 726). The timing is adjusted (step 724) and the method terminates (step 725). If the signal MSP_valid is OFF (step 714), then the value of Frame_Sync_Correction is set to zero and all accumulators are reset to zero (step 728).

Following the computation of correlations for relative frame 15 of the BCH, for purposes of this process, the value of Frame_Sync_Correction can be computed and applied anywhere in the interval of relative frames 16-20. However, to synchronize with receive signal code power (RSCP) measurements, it is preferable to apply the Frame_Sync_Correction value at the start of relative frame 20.

Although the frame tracking procedure has been described as having to perform accumulations preferably four times according to Equation 2, reading the frame numbers in preferred increments of five, and using a preferred frame offset of five, these values are not intended to be limiting, and can be adjusted to suit the needs of the operating system.

While specific embodiments of the present invention have been shown and described, many modifications and variations could be made by one skilled in the art without departing from the scope of the invention as defined by the claims. The above description serves to illustrate and not limit the particular invention in any way.

## Claims

1. A method for determining the validity of a most significant path in wireless communications wherein data is received in frame units in a multipath environment, the method comprising:

   correlating (708) received data with a training sequence over different lags;
   accumulating (710) a correlated data sequence N times for each lag position to produce at least one accumulation vector;
   determining (712) a most significant path value that is the largest value among the accumulation vectors, along with the position of the most significant path;
   calculating (730) a preliminary noise estimate, PNE, equal to an average of the accumulated data values;
   calculating (732) a preliminary noise threshold, PNT, according to the equation $C_1 \times$ PNE, where $C_1$ is a first

coefficient;

calculating (734) a final noise estimate, FNE, equal to the average of accumulated data values below the PNT;

calculating (736) a final noise threshold, FNT, according to the equation $C_2 \times$ FNE, where $C_2$ is a second coefficient ; and

determining (738) the validity of the most significant path if the most significant path value is greater than the FNT.

2. The method according to claim 1, wherein the value of $C_1$ is 1.5.

3. The method according to claim 1, wherein the value of $C_2$ is 1.83 if a broadcast channel transmit diversity control signal is off.

4. The method according to claim 1, wherein the value of $C_2$ is 2.2 if a broadcast channel transmit diversity control signal is on.

5. A wireless transmit/receive unit, WTRU, configured to determine the validity of a most significant path in wireless communications wherein data is received in frame units in a multipath environment, comprising:

a receiver configured to receive data;

a correlator (304, 306, 308, 310) configured to correlate the received data with a training sequence (506) over different lags, accumulate a correlated data sequence N times for each lag position to produce at least one accumulation vector, and determine

a most significant path value that is the largest value among the accumulation vectors, along with the position of the most significant path;

a processor (200) configured to:

calculate a preliminary noise estimate, PNE, equal to an average of the accumulated data values;

calculate a preliminary noise threshold, PNT, according to the equation $C_1 \times$ PNE, where $C_1$ is a first coefficient;

calculate a final noise estimate, FNE, equal to the average of accumulated data values below the PNT ; and

calculate a final noise threshold, FNT, according to the equation $C_2 \times$ FNE, where $C_2$ is a second coefficient ; and

determine the validity of the most significant path if the most significant path value is greater than the FNT.

6. The WTRU according to claim 5, wherein the value of $C_1$ is 1.5.

7. The WTRU according to claim 5, wherein the value of $C_2$ is 1.83 if a broadcast channel transmit diversity control signal is off.

8. The WTRU according to claim 5, wherein the value of $C_2$ is 2.2 if a broadcast channel transmit diversity control signal is on.

**Patentansprüche**

1. Verfahren zum Bestimmen der Gültigkeit eines höchstwertigen Pfades in der drahtlosen Kommunikation, wobei Daten in Rahmeneinheiten in einer Multipfadumgebung empfangen werden, umfassend:

Korrelieren (708) der empfangenen Daten mit einer Trainingssequenz über verschiedene Verzögerungen hinweg;

Kumulieren (710) einer korrelierten Datensequenz N-mal für jede Verzögerungsposition, um mindestens einen Kumulierungsvektor zu erzeugen;

Bestimmen (712) eines höchsten Pfad-Wertes, der der größte Wert unter den Kumulierungsvektoren ist, zusammen mit der Position des höchstwertigen Pfades;

Berechnen (730) einer vorläufigen Rauschschätzung (PNE), die gleich einem Durchschnitt der kumulierten Datenwerte ist;

Berechnen (732) einer vorläufigen Rauschschwelle (PNT) gemäß der Gleichung $C_1$ x PNE, wobei $C_1$ ein erster Koeffizient ist;

Berechnen (734) einer endgültigen Rauschschätzung (FNE), die gleich dem Durchschnitt kumulierter Datenwerte, die unter der PNT liegen, ist;
Berechnen (736) einer endgültigen Rauschschwelle (FNT) gemäß der Gleichung $C_2$ x FNE, wobei $C_2$ ein zweiter Koeffizient ist; und
Bestimmen (738) der Gültigkeit des höchstwertigen Pfades, wenn der höchste Pfadwert größer als die FNT ist.

2. Verfahren nach Anspruch 1, wobei der Wert von $C_1$ 1,5 ist.

3. Verfahren nach Anspruch 1, wobei der Wert von $C_2$ 1,83 ist, wenn ein Broadcast-Kanal-Sendediversitäts-Steuersignal ausgeschaltet ist.

4. Verfahren nach Anspruch 1, wobei der Wert von $C_2$ 2,2 ist, wenn ein Broadcast-Kanal-Sendediversitäts-Steuersignal eingeschaltet ist.

5. Drahtlose Sende-/Empfangseinheit (WTRU), die konfiguriert ist, die Gültigkeit eines höchstwertigen Pfades in der drahtlosen Kommunikation zu bestimmen, wobei Daten in Rahmeneinheiten in einer Multipfad-Umgebung empfangen werden, umfassend:

einen Empfänger, der konfiguriert ist, Daten zu empfangen;
einen Korrelator (304, 306, 308, 310), der konfiguriert ist, die empfangenen Daten mit einer Trainingssequenz (506) über verschiedene Verzögerungen hinweg zu korrelieren, eine korrelierte Datensequenz N-mal für jede Verzögerungsposition zu kumulieren, um mindestens einen Kumulierungsvektor zu erzeugen, und um einen höchsten Pfadwert, der der größte Wert unter den Kumulierungsvektoren ist, zusammen mit der Position des höchstwertigen Pfades zu bestimmen;
einen Prozessor (200), der konfiguriert ist:

eine vorläufige Rauschschätzung (PNE) zu berechnen, die gleich einem Durchschnitt der kumulierten Datenwerte ist;
eine vorläufige Rauschschwelle (PNT) gemäß der Gleichung $C_1$ x PNE zu berechnen, wobei $C_1$ ein erster Koeffizient ist;
eine endgültige Rauschschätzung (FNE) zu berechnen, die gleich dem Durchschnitt der unter der PNT liegenden kumulierten Datenwerte ist; und eine endgültige Rauschschwelle (FNT) gemäß der Gleichung $C_2$ x FNE zu berechnen, wobei $C_2$ ein zweiter Koeffizient ist; und
die Gültigkeit des höchstwertigen Pfades zu bestimmen, wenn der höchste Pfadwert größer als die FNT ist.

6. WTRU nach Anspruch 5, wobei der Wert von $C_1$ 1,5 ist.

7. WTRU nach Anspruch 5, wobei der Wert von $C_2$ 1,83 ist, wenn ein Broadcast-Kanal-Sendediversitäts-Steuersignal ausgeschaltet ist.

8. WTRU nach Anspruch 5, wobei der Wert von $C_2$ 2,2 ist, wenn ein Broadcast-Kanal-Sendediversitäts-Steuersignal eingeschaltet ist.


**Revendications**

1. Procédé de détermination de la validité d'une voie la plus significative dans des communications sans fil dans lequel les données sont reçues en unités de trame dans un environnement multivoie, le procédé comprenant :

la corrélation (708) des données reçues avec une séquence de formation sur différents retards ;
le cumul (710) d'une séquence de données corrélées N fois pour chaque position de retard pour produire au moins un vecteur de cumul,
la détermination (712) d'une valeur de voie la plus significative qui est la plus grande valeur parmi les vecteurs de cumul, avec la position de la voie la plus significative ;
le calcul (730) d'une estimation de bruit préliminaire, PNE, égale à une moyenne des valeurs de données cumulées ;
le calcul (732) d'un seuil de bruit préliminaire, PNT, selon l'équation $C_1$ x PNE, où $C_1$ est un premier coefficient ;
le calcul (734) d'une estimation de bruit final, FNE, égale à la moyenne des valeurs de données cumulées au-dessous du PNT ;

le calcul (736) d'un seuil de bruit final, FNT, selon l'équation $C_2$ x FNE, où $C_2$ est un deuxième coefficient ; et
la détermination (738) de la validité de la voie la plus significative si la valeur de la voie la plus significative est supérieure au FNT.

2. Procédé selon la revendication 1, dans lequel la valeur de $C_1$ est 1,5.

3. Procédé selon la revendication 1, dans lequel la valeur de $C_2$ est 1,83 si un signal de commande de diversité de transmission de canal de diffusion est désactivé.

4. Procédé selon la revendication 1, dans lequel la valeur de $C_2$ est 2,2 si un signal de commande de diversité de transmission de canal de diffusion est activé.

5. Unité d'émission/réception sans fil, WTRU, configurée pour déterminer la validité d'une voie la plus significative dans des communications sans fil dans laquelle les données sont reçues en unités de trame dans un environnement multivoie, comprenant :

un récepteur configuré pour recevoir des données ;
un corrélateur (304, 306, 308, 310) configuré pour corréler les données reçues avec une séquence de formation (506) sur différents retards, pour cumuler une séquence de données corrélées N fois pour chaque position de retard pour produire au moins un vecteur de cumul, et pour déterminer une valeur de voie la plus significative qui est la plus grande valeur parmi les vecteurs de cumul, avec la position de la voie la plus significative ;
un processeur (200) configuré pour :

calculer une estimation de bruit préliminaire, PNE, égale à une moyenne des valeurs de données cumulées ;
calculer un seuil de bruit préliminaire, PNT, selon l'équation $C_1$ x PNE, où $C_1$ est un premier coefficient ;
calculer une estimation de bruit final, FNE, égale à la moyenne des valeurs de données cumulées au-dessous du PNT ;
calculer un seuil de bruit final, FNT, selon l'équation $C_2$ x FNE, où $C_2$ est un deuxième coefficient ; et
déterminer la validité de la voie la plus significative si la valeur de la voie la plus significative est supérieure au FNT.

6. WTRU selon la revendication 5, dans laquelle la valeur de $C_1$ est 1,5.

7. WTRU selon la revendication 5, dans laquelle la valeur de $C_2$ est 1,83 si un signal de commande de diversité de transmission de canal de diffusion est désactivé.

8. WTRU selon la revendication 5, dans laquelle la valeur de $C_2$ est 2,2 si un signal de commande de diversité de transmission de canal de diffusion est activé.

102

104

2X BCH TIME SLOT →

SFN EVEN/ODD INDICATOR →

BCH TX DIVERSITY INDICATOR →

106

CELL ID →

108

FRAME
TRACKING
ALGORITHM

110

→ FRAME SYNC CORRECTION

**FIG. 1**

102

2X BCH
TIME SLOT

**200**

FRAME
TRACKING

202

FSP
LOCATION

MSP
VALID

204

FSP
PROCESSING

206

110

FRAME
SYNC
CORRECTION

**208**

TIMING
MANAGER

**FIG. 2**

*FIG. 3*

*FIG. 4*

CORRELATION IS DONE OVER
512 CHIPS COHERENTLY

BASIC MIDAMBLE SEQUENCE OF +1,-1 LENGTH 456
CORRESPONDS TO A GIVEN CELL PARAMETER

┌──────────────────────────────────┐ ⌐ 506
│                                  │
└──────────────────────────────────┘

⌐ 506                                    ⌐ 506

| BASIC MIDAMBLE SEQUENCE OF +1,-1,+j,-j LENGTH 456 | BASIC MIDAMBLE SEQUENCE OF +1,-1,+j,-j LENGTH 456 |

| SEQUENCE OF +1,-1,+j,-j | | | | | | SEQUENCE OF +1,-1,+j,-j |

| m1 SEQUENCE LENGTH 512 | ▦ |

399 FOR m1
⌐ 502

| ▮ | m2 SEQUENCE LENGTH 512 |

342 FOR m2

⌐ 504

**FIG. 5**

FRAME SYNC CORRECTION          FRAME SYNC CORRECTION
RESET ACCUMULATORS             RESET ACCUMULATORS

FRAMES PROCESSED

0    50   100  150  200  250  300  350  400   TIME (IN ms)

A         B          C         B          C

**FIG. 6**

700

```
┌─────────────────────────┐
│      GATHER BCH AND      │
│   OTHER SIGNAL INPUTS    │────── 702
└─────────────────────────┘
             │
             ▼
┌─────────────────────────┐
│   EXTRACT DATA WINDOW    │
│  AROUND MIDAMBLE OF BCH  │────── 704
└─────────────────────────┘
             │
             ▼
┌─────────────────────────┐
│    GENERATE MIDAMBLE     │
│        SEQUENCE          │────── 706
└─────────────────────────┘
             │
             ▼
┌─────────────────────────┐
│   CORRELATE BCH MIDAMBLE │
│  OVER DIFFERENT LAGS TO  │
│  FIND POSITION OF FIRST  │────── 708
│    SIGNIFICANT PATH      │
│          (FSP)           │
└─────────────────────────┘
             │
             ▼
┌─────────────────────────┐
│       ACCUMULATE         │
│    CORRELATOR OUTPUT     │
│    FOUR TIMES, SPACED    │────── 710
│    FIVE FRAMES APART     │
└─────────────────────────┘
             │
             ▼
┌─────────────────────────┐
│  PERFORM PEAK DETECTION  │
│ TO FIND LARGEST ACCUMULATED │
│  VALUE, WHICH IS THE MOST │────── 712
│ SIGNIFICANT PATH (MSP) VALUE │
└─────────────────────────┘
             │
             ▼
714 ──────  ◇ MSP VALID? ◇ ──── NO ──▶ (B)
             │
            YES
             │
             ▼
            (A)
```

**FIG. 7A**

**FIG. 7B**

<u>714</u>

730 — AVERAGE ALL ELEMENTS OF MSP ACCUMULATOR

732 — CALCULATE PRELIMINARY NOISE THRESHOLD (PNT)

734 — AVERAGE ALL ELEMENTS OF MSP ACCUMULATOR BELOW PNT

736 — CALCULATE FINAL NOISE THRESHOLD (FNT)

738 — MSP VALUE > FNT?

NO → 744 MSP IS NOT VALID

YES

740 — MSP IS VALID

742 — END

*FIG. 7C*